(19) Europäisches Patentamt / European Patent Office / Office européen des brevets

(11) **EP 3 748 153 A2**

(12) **EUROPEAN PATENT APPLICATION**
published in accordance with Art. 153(4) EPC

(43) Date of publication:
**09.12.2020 Bulletin 2020/50**

(51) Int Cl.:
***F03D 3/04*** *(2006.01)*

(21) Application number: **19746709.5**

(22) Date of filing: **01.02.2019**

(86) International application number:
**PCT/MX2019/000009**

(87) International publication number:
**WO 2019/151847 (08.08.2019 Gazette 2019/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.02.2018 MX 2018001433**

(71) Applicant: **Fierros Farell, Luis Javier**
**Ciudad de México, 10200 (MX)**

(72) Inventor: **FIERROS PALACIOS, Ángel**
**Ciudad de México, 10200 (MX)**

(74) Representative: **Igartua, Ismael**
**Galbaian S. Coop.**
**Garaia Parke Teknologikoa**
**Goiru Kalea 1**
**20500 Arrasate-Mondragón (ES)**

(54) **WIND-BASED ELECTRICAL POWER GENERATION SYSTEM**

(57) The present invention is designed and calculated to use different wind regimes, namely, laminar, turbulent and hurricane-wind regimes, to exploit at the industrial level the enormous wind potential in the different regions of the planet. The result is a wind-based electrical power generation system that couples a mechanical system to an electrical system.

Fig. 1

## Description

The invention relates to an electric power source from wind.

## Field of the invention

The invention relates to a system for the generation of electric power from wind, which is adjustable to different wind flows.

## Background of the invention

Within the closest state of the art, MX patent MX334281 of the same inventor discloses an eolic generator comprising a Venturi tube with a similar arrangement to that of the present invention, however, the mentioned patent does not mention a mechanism for adapting the dimensions of the system to suit different levels of wind flow. Also, US patent 6,61,601 B2 (Reitz) discloses an installation comprising several stages of a Venturi type tube (convergent divergent nozzles) which comprise at least one rotor connected to an electric generator, the novelty in this invention is the second air inlet stage which facilitates the wind flow from the first inlet, facilitating the generation of energy. The document FR25877631 (Thomas) discloses a wind turbine comprising two wind generators, a wind turbine and an aerogenerator. The converging air intake hood, presented to the wind, through two vertical ends which function as a vane, accelerates the velocity of the air to the diffuser and, by separating the air into two coils, the air spins in the vortex and transfers its energy to the blades which with low pressure and centripetal force the rotate around the axis of rotation; then, the air escapes laterally towards the 90-fold bends turned backwards on the wind machine and engages the diverging nozzles, this results in a static pressure at the outlet with the ambient air. This wind machine "panemone" with "push" and "pull" blades of maximum efficiency can actuate: a hydraulic pump, an alternator or generator for lighting, for desalination of seawater and electrolysis by decomposition of water into hydrogen and oxygen. The GB2413829A (Douglas) discloses a wind driven turbine having a rotor with a shaft carrying turbine rotor blades located within a housing. The housing forms a conduit with an air inlet and an air outlet, the rotor blades forming with the conduit an impact area of the blade with the conduit having a section area that is reduced towards the impact area of the blade to form a throat like interface between an interior of the conduit surface and the tips of the blades in order to produce a Venturi effect over the rotor blades. The turbine can be mounted on buildings and corners of buildings for the generation of electric power in urban areas. Document GB2430982 (A) discloses a wind turbine comprising a housing in the form of a Venturi. The turbine can make use of differential air pressures between opposite sides of a building. The turbine can rotate in opposite directions depending on the direction of wind. The turbine may be an axial or transverse flow turbine. The turbine conduit may have a solar reflective coating and a solar absorbing coating to create an internal differential air pressure to form an air movement through the primary motor. Document KR20130073241A discloses a wind power generator for including a guide panel that closes the left and right rotary vertical blades on both left and right sides based on a wind separation cover and inducing the wind to flow in the left and right rotary vertical blades on the fixed side direction. A wind power generator includes a body part, a multi stage vertical vane, a blade rotation axis, a wind separation cover and a guide panel. The multi stage vertical blade includes the left to right vertical blades. The rotational axis of the blade independently rotates each stage of the multi stage vertical blades. The wind separation cover separates the wind, from the front center of the multi stage blades, in the left and right directions. The guide panel closes the right rotary vertical blade on the left side thereof in reference of the wind cover and is obliquely shaped to have a step shape so that the wind flies in the left rotary vertical blade in a fixed direction. The guide panel blocks the left rotary vertical blade on the right hand side and is obliquely shaped to have a step shape so that the wind flies inside the right rotary vertical blade in a fixed direction.

Notwithstanding the latter, the cited documents do not disclose a mechanism or system for obtaining a ratio of the dimensions between the elements of the disclosed systems to generate a maximum electrical power independent of the usual air flow in the region where a system of these characteristics is intended to be installed. Also, the systems described in the cited documents are oriented to laminar wind flows, do not address or mention systems capable of generating power in accelerated or hurled air flows. Likewise, the documents cited do not describe the characteristic that the systems can be coupled to one another in a modular manner.

In addition, the following differences were also found with respect to the state of the art:

    a. Venturi is used for accelerating the air inside the device in all the mentioned documents.

    b. All mentioned documents relate to laminar winds such as environmental breezes

    c. The proposed systems lack computations and are intended to generate electrical power to generate low scale power, ie, it does not solve the problem of generating considerable electronic power as obtained in a wind power generation station.

d. Mentioned documents use vertical devices such as fans, to transform the flow of air into mechanical movement, which is used to move the electric power generator. None of the systems serve to generate electric power at an industrial level in the regime of extreme winds such as, for example, non laminar flow, turbulent and hurdling. Because they are difficult to operate and its efficiency is less than that of traditional wind power generators.

e. The disclosed inventions in the mentioned documents appear to be very complicated, from the electromechanical point of view, so that their cost does not make them competitive, nor economically viable, as compared to traditional wind power generation systems.

f. The disclosed inventions in the mentioned documents are systems which may be useful for generating small amounts of energy to operate a water pump, for example.

g. The production of electric power in these inventions is limited because they are intended to use only laminar flow of ambient air. In other words, their utility is marginal.

## SUMMARY OF THE INVENTION

The present invention is designed and calculated to use extreme winds regimes: turbulent, strong winds and even gale force winds in order to be exploit the huge wind potential that exists in the different regions of the planet at industrial level. In addition, it can also be implemented for laminar flows.
Dimensionally, the system is calculated from the wind velocity at the inlet of the converging diverging nozzle subsystem and the pulse turbine. All of the calculations are based on fluid dynamics.
The system is much less and lighter than traditional systems and generates the double electric power as those.
In the present invention the traditional blades and steel towers are not used, making its cost significantly lower. The tower supports the inlet Venturi, the converging diverging nozzle subsystem, impulse turbine, inertia flywheel, anchoring system, drive shaft, orientation system, etc. And the cover for the whole module; it is built of concrete as a truncated pyramid in which in the upper surface the module is located and at the bottom, the entire electric power generation system, in addition to the peripheral metering and control systems.
The use of the present invention reduces costs, weight and measures. In traditional systems the height of the tower is determined by the size of the blades; and the generation of electric power for that size. If it is desired to generate more power, larger blades and higher towers are to be used. Increasing costs greatly, making it more problematic for the transport of the parts.
Each module of the electric power generation system of the present invention contains two independent subsystems. The heavier part of the whole electric power generation subsystem is seated in the floor of said truncated pyramid, as is easy to note, the cost savings of construction, transportation of parts, etc., is dramatically depressed.
The anchoring of the mechanical subsystem which seats on the upper face of the truncated pyramid has to be very robust because the entire system will suffer from extreme winds.
The problem of noise at the wind output can be solved by the aid of an inverted Venturi with blinds.
According to the present invention in the system no blades are used, systems of more than one module can be used by placing any number of modules in a horizontal or vertical parallel. Combinations of both arrangements for an exploitation of the potential wind resources of the location.
The system for generating electric power from wind can be installed at almost any location, in remote locations, hills, in the sea, etc. and local materials and workforce can be used for the construction of the tower.
The use of the present system for generating electric power from wind has the following advantages:

a. The invention relates to the use of any type of wind.

b. The invention relates to a very robust generation of electric power.

c. Cost per Megawatt generated is less than in traditional systems.

d. The invention relates to a method for the use of local materials and workforce.

e. The invention relates to an easy method for the construction, operation and transportation of parts and equipment.

f. The invention relates to the creation of a novel technology, with simple manufacturing method which can impact the construction of national electric power generators, as well as in the manufacture of measuring equipment, operation and establishment of maintenance shops, etc.

## DESCRIPTION OF THE FIGURES

FIG. 1 Shows a side view of the electric power generation system of the present invention.

FIG. 2 Shows a top view of the electric power generation system of the present invention.

FIG. 3 Shows a rear view of the electric power generation system of the present invention.

FIG. 4 shows a diagram showing the operation of the Pelton wheel, Francis, or a combination of the above two.

FIG. 5 Shows an example of the converging diverging nozzle used in the present invention.

FIG. 6 Is a diagram for calculations of the maximum discharge.

## DETAILED DESCRIPTION OF THE PREFERRED EMBODIMENT

The electric power generation system proposed in the present invention consists of the design, calculation of dimensions and implementation of an electromechanical system for generating electric power from the wind.

The invention relates to a novel technology for generating electric power using wind energy as a primary source and operating effectively under any wind flow conditions, from laminar flow to turbulent, strong winds and even gale force.

The electric power generation system comprises coupling a mechanical subsystem to another electrical subsystem. The elements of the system together are constituted by the following elements:

a. Structure

b. Inlet cavity

c. Converging diverging nozzle

d. High speed Jet

e. Drive turbine

f. Coupling shaft

g. Inertia wheel

h. Electric power generator

i. Mechanical and electrical support Equipment

j. Output cavity

k. Concrete containment tower

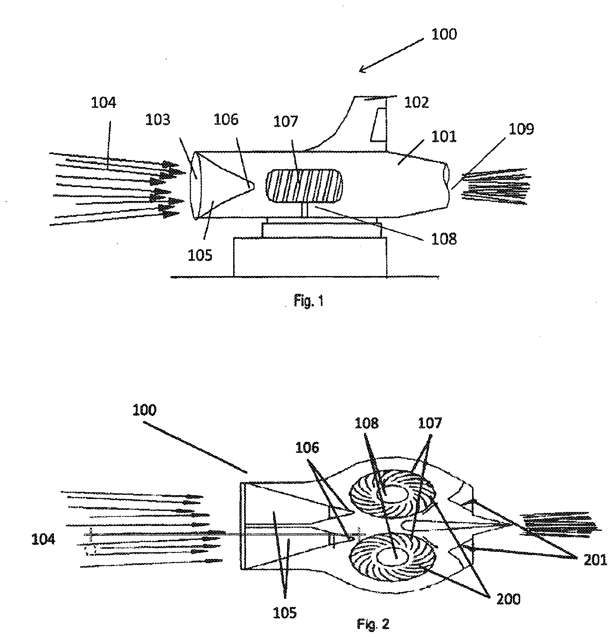

Shown in FIG. 1 is a side view of the system for generating electrical power from the wind 100 of the present invention in which the metal structure 101 is illustrated; an orientation fin 102; the inlet cavity 103; inlet wind 104; a converging diverging nozzle 105; a maximum narrowing area where the high speed jet 106 is found; an impulse turbine 107; the coupling shaft 108 and the output cavity 109.

## Structure

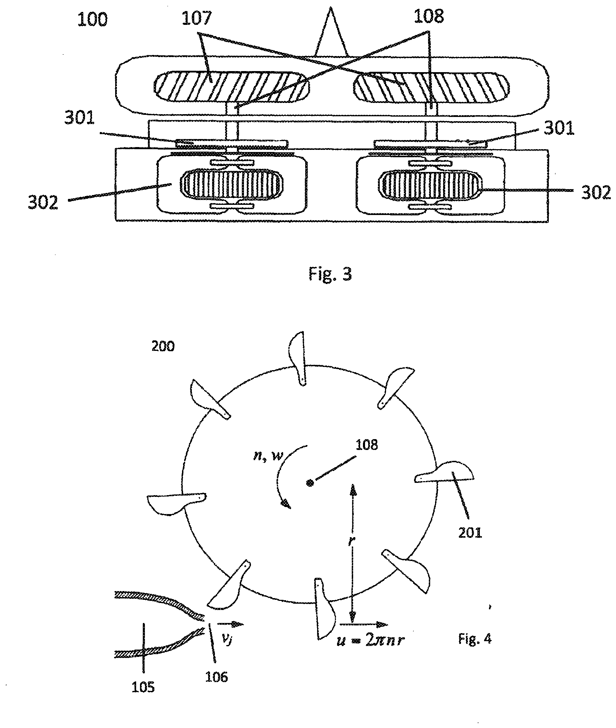

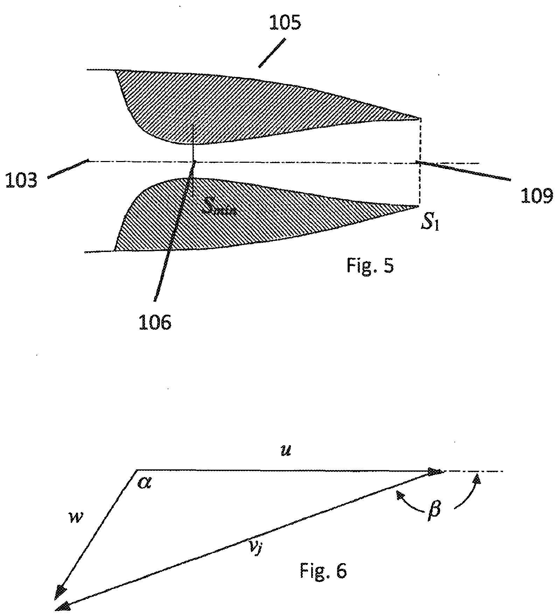

The structure 101 is the receptacle or frame, made of any material, which contains therein the mechanical subsystems: inlet cavity 103, converging diverging nozzle 105, impulse turbine 107, coupling shaft 108, and the flywheel. It is a module having an orientation mechanism capable of orienting it in the wind direction. Further, according to the preferred embodiment, each frame module 101 May contain at least two of each of the aforementioned mechanical subsystems. In FIG. 2, we can see a top view of the electric power generation system 100 of the present application in which the preferred embodiment is shown and the manner in which two high speed jets 106 are arranged, two coupling shafts 108, two diverging converging nozzles 105 in order to note that the present invention is not limited to providing a pair of the aforementioned subsystems within the metal structure 101, the present invention includes the possibility of coupling several of them into arrangements which may be horizontal and also on one another, or in both forms. Also, the power generation systems 100 can be mateable and assembled in a modular manner. In FIG. 3, we can see the manner in which the elements of the system 100 are arranged in a front manner, such as the impulse turbines 107, the coupling shafts 108, the inertia wheels 301 and the electric generators 302. In FIG. 4, we can see a diagram showing the operation of the Pelton wheel 200 , wherein the converging diverging nozzle 105 delivers at its narrowest part a high speed jet 106 which impacts the blades 201 which creates a rotation of the coupling shaft 108 which is directed to the electric generator 302. FIG. 5 shows a diagram showing a side view of a convergent diverging nozzle 105 as used in the present invention, in this figure the inlet orifice 103, the high velocity jet 106, which is disposed in the narrowest part of the nozzle 105 and the outlet 109.

The operation of each of the aforementioned subsystems is further explained.

### Inlet cavity

The inlet cavity 103 is the front opening through which the air 104 penetrates from the outside to each module containing the electrical subsystems. It is conical in shape and constitutes a passive device called Venturi which is actually a truncated cone. Its function is to accelerate the incoming air in a first stage; so that when the narrower conical surface engages the diverging converging nozzle 105, it transmits a wind flow whose velocity is higher than that which has the outer wind at the inlet of the Venturi, which is the widest part of the truncated cone and forming the inlet orifice 103 of the module. The important feature of that device is to communicate an acceleration to the input wind 104. In other words, the same amount of air entering the device by its wider surface has to exit the Venturi at its narrowest part, but more quickly.

### Converging diverging nozzle

The converging diverging nozzle 105 is a device that is first narrow and then widens up, in order that the wind from the Venturi is accelerated even further in that second stage; in order that very high flow rates can be achieved, which can even become supersonic, these velocities may range from 138m/s to 250 m/s. In general terms, the purpose of this subsystem is to accelerate the wind so that a high speed jet 106 is generated at the outlet of the nozzle. The converging diverging nozzle 106 of the present invention plays a role analogous to that of the sublevel that exists in a hydraulic system between the surface of the vessel of a dam and the machine room where the impulse turbines are placed. That sublevel provides the primary potential energy that the turbine transforms in motion or kinetic energy, which is then used by the electric power generators.

For the laminar flow case, one of the following two solutions can be used: adding to the nozzle 106 a further stage that is also converging diverging; constructing smaller modules for the utilization of that kind of wind flow rates; or both.

### Impulse turbine

The impulse turbine 107 is a hydraulic device in which all of the primary energy of the usable wind is converted, by means of the previous subsystem into motion or kinetic energy.

### Converging diverging nozzle

The convergent nozzle 105 converts to atmospheric pressure the available capacity of the high speed jet 106. The jet 106 produced impacts on each of the blades, or vanes of the turbine, which in the case of the system of the present invention uses a Pelton, Francis, or a combination of the two 200, thereby imparting to that mechanical subsystem a change in its amount of movement, or what is the same, a momentum change.

The vanes of the turbine 201 are in the form of a dividing cup, which has the objective to divide the flow. The cup has a partition in the center so that it has two cavities. This type of impulse turbines are called Pelton 200 wheels.

### Coupling

The coupling between the mechanical subsystem and the corresponding electric power generation device is carried out via a shaft 108 that goes from the center of the impulse turbine 107 to the electric power generator 302 which lies in the floor of the tower. Between the drive turbine 107 and the generator 302, the coupling shaft 108 and a flywheel 301 which has the ability to stabilize the mobile mechanical system are placed.

### Inertia wheel

The inertia flywheel 301 is a passive element that only provides the mechanical subsystem with additional inertia that adds kinetic energy or movement to the subsystem. When the mechanical subsystem is stopped, the inertia wheel continues to move freely and delivers it to the generator through the coupling shaft, additional motion energy.

### Power generator

The electric power generator 302 is the subsystem that transforms the power of movement of the impulse turbine 107 into electrical energy. Its characteristics are well known in the art by which they are not disclosed herein. It is the heavier part of the entire system, the reason for which it is placed on the floor of the tower. Accordingly, the mechanical subsystems that transform the primary wind energy into kinetic energy are lighter decreasing the costs of the tower containing the entire system.

### Support equipment

The mechanical and electrical support equipment are all that which is used to attach to the tower, the modules and the peripheral equipment of the electric subsystem, they are conventional elements in electric power generating plants.

### Exit cavity

The outlet cavity 109 has the advantage of attenuating the noise that produces the flow of wind to its passage by all of the mechanical subsystems. It is intended to be a passive element that opens to the outlet and having the characteristics of an exhaust pipe as used in all types of internal combustion vehicles.

### Container tower

The container tower of the entire system can be constructed in the same way as a concrete building. Since the system no longer uses conventional wind tower blades, its height is small and its shape would be that of a small truncated pyramid in which the minor surface is fixed to the mechanical subsystems described above; while in its interior the electrical systems are concentrated in the floor.

The system for the generation of electric power from the wind is designed and calculated to use extreme winds regimes: turbulent, strong winds, and even gale force winds, in order to exploit to an industrial level the huge wind potential with different winds regimes, with some modifications for laminar flows.

Dimensionally, it is calculated from the wind velocity at the entrance of the converging diverging nozzle subsystem 105 and the impulse turbine 107. All the calculations are based on fluid mechanics.

The wind power generation system of the present invention is much less and lighter than traditional systems and can generate the double electric power as the conventional towers.

Since traditional blades and steel towers are not used in this invention, the cost is significantly lower. The tower supporting the inlet Venturi, the converging diverging nozzle subsystem, the impulse turbine, inertia flywheel, anchoring system, drive shaft, orientation system, etc. , and the cover of the whole module, can be constructed of concrete as a truncated pyramid in which the. upper surface supports the module 100 and at the bottom, the entire electric power generation system lies inside, in addition to the peripheral metering and control systems.

All the foregoing reduces costs, weight, and measures. In traditional systems, the height of the tower is determined by the size of the blades, and the amount of electric power generation for that size. If it is desired to generate more electrical power, larger blades and higher towers are to be used, increasing costs, and making it more problematic for transporting the parts.

Each module of the electric power generation system of the present invention contains two independent subsystems. The heavier part of the whole electric power generation subsystem is seated in the floor of said truncated pyramid, as is easy to note, the cost savings of construction, transportation of parts, etc., is dramatically depressed.

The anchoring of the mechanical subsystem which seats on the upper face of the truncated pyramid has to be very robust because the entire system will suffer from extreme winds.

The problem of noise at the wind output can be solved by the aid of An inverted Venturi with blinds.

According to the present invention in the system no blades are used, systems of more than one module can be used by placing any number of modules in a horizontal or vertical parallel. Combinations of both arrangements for an exploitation of the potential wind resources of the location.

The system for generating electric power from wind can be installed at almost any location, in remote locations, hills, in the sea, etc. and local materials and workforce can be used for the construction of the tower.

The use of the present system for generating electric power from wind has the following advantages:

a. The invention relates to the use of any type of wind.

b. The invention relates to a very robust generation of electric power.

c. Cost per Megawatt generated is less than in traditional systems.

d. The invention relates to a method for the use of local materials and workforce.

e. The invention relates to an easy method for the construction, operation and transportation of parts and equipment.

f. The invention relates to the creation of a novel technology, with simple manufacturing method which can impact the construction of national electric power generators, as well as in the manufacture of measuring equipment, operation, and establishment of maintenance shops, etc.

## OPERATION OF THE DESCRIBED SYSTEM FOR THE WIND-BASED ELECTRIC POWER GENERATION

The flow of the wind 104 flow through the inlet cavity 103, enters the system through a Venturi and undergoes a first acceleration stage and enters the converging diverging nozzle 105 which accelerates it more so that at the outlet of the device 105 a high speed jet 106 is provided. The value of that output velocity depends on the speed with which the wind system enters the system, and the dimensions of the various sections of the following cross sections:

- Inlet cavity 103, which is the widest part of the Venturi

- Venturi outlet cavity and cross section of the converging part of the nozzle 105.

- Cross section of the diverging portion of the nozzle 105.

All of the surfaces involved in the process will be calculated using the continuity equation in the mentioned stages, ie, the wind input speed 104 is used to calculate the wind output speed at the inlet of the Nozzle 105. With this value we now calculate the velocity of the jet 106.

The jet 106 impacts directly on the Pelton wheel 200 which is positioned in an horizontal arrangement, and strikes one vane 201 at a time. The calculation of the dimensions of the turbine 107 is performed from the velocity of the jet 106.

The turbine 107 rotates around itself and transmits the mechanical power to the electric power generator 302 through a shaft 108 that contains the flywheel 301. The role of the latter is to provide additional mechanical energy to the electric subsystem.

All of the calculations on this point are performed from the high speed jet 106 output using the continuity equation in a systematic fashion. This means that all of the characteristics of the entire electric power generation equipment are governed by the wind potential that exists in the region of interest, given that the system is effective for laminar flows, turbulent, strong winds and even gale force winds.

In order to attenuate the noise produced by the wind at the exit of the module, an inverted Venturi can be used with blinds, slots or louvers to eliminate acceleration, i.e. if the exit cavity is as large as the inlet cavity, the wind will practically collect its inlet velocity. The blinds, louvers or slots reduce the noise because they are expected to act as a noise suppression.

The present invention solves the problem of using very high steel towers, which in traditional systems are very heavy so that its function in an scenario of laminar winds or not sufficiently turbulent winds is almost zero, in addition to being very expensive (cost per megawatt installed equivalent to 30% of the total cost of the equipment).

In the present invention the tower can be built of concrete using local materials and workforce, in the form of truncated pyramid and of much less height than the steel tower. The invention also avoids the use of traditional wind tower blades, which is difficult to calculate, manufacture and transport and which is reflected in the reduction in costs of the installed megawatts.

The modules of the invention disclosed herein are smaller than traditional generator systems therefore are of smaller weight, simpler, lower cost, and greater generation. Fort the design of the present invention, the following are required:

a. Area with eolic resources.

b. Wind flows from laminar, turbulent, strong winds and even gale force winds.

c. Mechanical and electrical subsystems.

d. Lighter modules than traditional wind power turbines.

e. More generation of Megawatt installed than in traditional systems.

f. vibration systems are solved by mechanical subsystems.

## CALCULUS, DIMENSIONS AND DESIGNS OF THE SYSTEM FOR THE WIND-BASED ELECTRIC POWER GENERATION

### IMPULSE TURBINE

The impulse turbine 107 is a hydraulic device in which all of the available energy in the wind flow is converted to kinetic energy by means of a nozzle or nozzle 105. The nozzle 105 transforms at atmospheric pressure, the available capacity into a high-speed jet 106. The jet 106 impacts on each of the vanes 201 of the turbine 107, one at a time, and transfers to the mobile system a change in momentum. The vanes 201 of the turbine are in the form of a dividing elliptical cup. This type of impulse turbines are called Pelton Wheels 200. Theoretically the power delivered by the jet 106 to the Pelton wheel 200 is given by the formula 1:

$$P = \rho Q u (v_j - u)(1 - cos\beta)$$

maximum power is delivered when:

$$\frac{dP}{du} = 0$$

$$[\rho Q(1 - cos\beta)](v_j - 2u) = 0$$

*maximum power is delivered when: dp/du = 0

Where $\rho$ is the mass density, Q is the discharge, $\beta \cong 165°$ is the vane angle (FIG. 6), $v_j$ is the velocity of jet 106; and u = 2$\pi$nr (formula 3) is the peripheral linear velocity of turbine 107, where n is the number of revolutions per minute, r the radius or distance from the shaft 108 of turbine 107 to the center of Jet 106. For maximum power is given by the formula 4 :

$$u^* = 2\pi n^* r = \frac{v_j}{2}; \; with \; n^* = \frac{n}{60}$$

### DISCHARGE

The mass of air passing into the unit of time through a cross section of the nozzle is given by the formula:

$$Q = \rho v S$$

where Q is the discharge, $\rho$ the mass density and v the velocity of the wind flow, and S the area of the cross section. The upper limit of that amount is calculated with the following formula:

$$Q_{max} = \rho_* v_* S_{min} = \sqrt{\gamma P_0 \rho_0} \left\{ \frac{2}{\gamma+1} \right\}^{\frac{1+\gamma}{2(\gamma-1)}} \cdot S_{min}$$

Where $\gamma = \frac{C_p}{C_v}$ being $C_p$ and $C_v$ the specific heats with constant pressure and volume respectively; $P_0$ and $\rho_0$ are pressure and density of the ambient air respectively.

## DIVERGING CONVERGING NOZZLE

The diverging converging nozzle 105 is a device which in its first section is continuously narrower towards its outer end, so that the outer end is where the minimum area of its cross section is located.

The nozzle is a device that is first narrow and then expanded. It is known as a *Laval* nozzle, and with its use, a supersonic flow speed rate can be achieved.

The maximum flow density j * can only be reached in the narrowest cross section of the nozzle 105 such that the total discharge cannot be greater than the value: $S_{min}j$* On the other hand, at the narrowest part of the nozzle 105 the flow density increases while the pressure is decreased. A graphic can be made which exhibits a j as a function of p. By definition, the flow density is:

$$j = \left( \frac{P}{P_0} \right)^{\frac{1}{\gamma}} \left\{ \frac{2\gamma}{\gamma-1} P_0 \rho_0 \left[ 1 - \left( \frac{\rho}{\rho_0} \right)^{\gamma-1} \right] \right\}^{\frac{1}{2}}$$

With the above mentioned relation, we can further calculate the following:

The upper limit of the discharge Q,
The mechanical power delivered to the impulse turbine 107
The diameter of the impulse turbine 107,
The inlet cavity and the inlet discharge.

In the electric power generation system of the present invention, the dynamic of gases are considered relevant since the maximum velocity is calculated with the ratio and the value of $\gamma = \frac{C_p}{C_v}$ for the case of the wind circulating through the system:

$$V_{max} = C_0 \left( \frac{2}{\gamma-1} \right)^{\frac{1}{2}}$$

Wherein $C_0$ is the speed of sound and for a fluid such as the air: $\gamma = 1.4$

In order to calculate the surfaces of the straight sections, the continuity equation is systematically used. The maximum surface of the straight section of the inlet cavity is calculated by the formula:

$$\rho_0 v_1 S_{max}^e = \rho_1 v_j S_1;$$

This relationship is that of a compressible fluid. In addition, $v_1$ is the velocity of the incoming flow, $\rho_1$ the density of mass of jet $v_j$, and $S_1$; refers to the area of the straight output section.

POWER DELIVERED IN THE ELECTRIC POWER GENERATION SYSTEM

From the following equation:

$$P = \rho Q u (v_j - u)(1 - cos\beta)$$

The power delivered to the Pelton wheel 200 by the jet 106 can be obtained for the case of air. Clearly, in that equation P is the mechanical power per unit of mass

$$P = \rho_0 W_*$$

Moreover:

1 - $cos\beta \approx$ 1.966
$\rho_* = 0.634\rho_0$
$u = \pi nd$

where $\rho_*$ is the critical mass density, u is the peripheral linear speed of the Pelton wheel 200 and d is its diameter. In that case in "XX" the following is obtained:

$$W_* = (0.634 \times 1.966)Q_{max}\left[u(v_j - u)\right]$$

On the other hand, according to the ratios, the maximum power is obtained as follows:

$$W_{*max} = 1.246 \times 0.261 \times 10^3 u^2 S_{min}$$

Thus, the narrower part of the device has to be:

$$W_{*max} = 0.325 \times 10^3 u^2 S_{min}$$

**EXAMPLE**

For the following conditions:

$u_e^m = 25m.\,seg^{-1}$
$v_* = 122.6m.\,seg^{-1}$
$v_j^m = 138m.\,seg^{-1}$
$d = 2.22m$
$n = 595rpm$

Under these conditions, the electric power generated is to be:

$$W_{max}^m = 0.32 \text{ Mw}$$

The inlet cavity has the following maximum surface:

$$S_{max}^m = 0.69m^2$$

while the inlet discharge is:

$$Q_{max}^m = 180 kgr.seg^{-1}$$

Finally, the outlet cross section surface of the converging diverging nozzle is:

$$S_1^m = 0.25 m^2$$

## Claims

1. A system for electric power generation from the wind coupling a mechanical system to another electric system in which the elements of the system together are constituted by the following subsystems:

   a. Structure
   b. Inlet cavity
   c. Converging diverging nozzle
   d. High speed Jet
   e. impulse turbine
   f. Coupling shaft
   g. Inertia wheel (flywheel)
   h. Electric power generator
   i. Mechanical and electrical support Equipment
   j. Output cavity
   k. Concrete containment tower

   **characterized in that** the system is calculated from the wind velocity at the entrance of the converging diverging nozzle subsystem and the impulse turbine and the electric power generated is defined by the formula:

$$W_* = (0.634 \times 1.966)Q_{max}\left[u(v_j - u)\right]$$

2. An electric power generation system according to claim 1, wherein the structure is the receptacle containing the mechanical subsystems: inlet cavity, converging diverging nozzle, thrust turbine, coupling shaft, flywheel.

3. An electric power generation system according to claim 2, wherein each module contains in duplicate each of the mechanical subsystems enabling the coupling of the mechanical subsystems in arrangements which may be horizontal, as well as one on another, or in a combination of both arrangements.

4. An electric power generation system according to claim 1, wherein the inlet cavity is the front opening through which the wind penetrates from the outside and wherein the inlet cabinet is conical shaped and is a passive device called Venturi.

5. An electric power generation system according to claim 4 wherein said cavity accelerates the incoming wing, in a first stage; The narrower conical surface of the inlet cavity is then coupled to the diverging converging nozzle by transmitting a wind flow whose speed is higher than that of the wind entering the inlet of the Venturi.

6. The invention relates to an electric power generation system according to claim 4, **characterized in that** the same amount of air entering the device by its wider surface has to exit the Venturi at its narrowest part, at a higher speed.

7. An electric power generation system according to claim 1, wherein the converging diverging nozzle is a device that is first narrow and then wide, in order for wind coming from the Venturi accelerates even more.

8. An electric power generation system according to claim 7, wherein in the convergent diverging nozzle the velocity of the air is increased by reaching flow rates between the 138m/s to 250 m/s

**9.** An electric power generation system according to claim 7, wherein the purpose of the converging diverging nozzle is to generate a high speed jet thrust at the outlet of the nozzle.

**10.** An electric power generation system according to claim 7, wherein given the case of laminar flow, adding to the nozzle a further step which is also convergent diverging.

**11.** An electric power generation system according to claim 1, wherein the impulse turbine is a hydraulic device in which all of the primary energy of the available wind in the system is converted into motion or kinetic energy.

**12.** An electric power generation system according to claim 1, wherein the convergent diverging nozzle transforms at atmospheric pressure the available high speed jet capacity.

**13.** An electric power generation system according to claim 12, wherein the jet produced impacts on each of one the blades or vanes of the turbine, by imparting a change in its amount of movement or a change of momentum.

**14.** An electric power generation system according to claim 1, wherein the coupling shaft joins the mechanical system going from the center of the impulse turbine to the electric power generator by an inertia flywheel.

**15.** An electric power generation system according to claim 14, wherein the inertia flywheel is a passive element that provides the mechanical subsystem with additional inertia adding kinetic energy.

**16.** An electric power generation system according to claim 1, wherein the electric power generator is the subsystem that transforms the energy of movement of the impulse turbine into electric power and is located on the bottom of the structure.

**17.** An electric power generation system according to claim 1, wherein the output cavity attenuates the noise producing the wind flow.

**18.** An electric power generation system according to claim 1, wherein the concrete containment tower is a concrete structure whose height is not large and its shape is that of a truncated pyramid in which the minor surface in the top of the structure is fixed to the mechanical subsystems and in which the electrical systems are concentrated in the floor.

**19.** The electric power generation system of claim 1, wherein the flow of the air passing through the converging diverging nozzle is given by the formula:

$$j = \left(\frac{P}{P_0}\right)^{\frac{1}{\gamma}} \left\{ \frac{2\gamma}{\gamma - 1} P_0 \rho_0 \left[ 1 - \left(\frac{\rho}{\rho_0}\right)^{\gamma - 1} \right] \right\}^{\frac{1}{2}}$$

**20.** An electric power generation system according to claim 19, **characterized in that** the calculations of:

The upper limit of the discharge Q
The mechanical power delivered to the impulse turbine
The diameter of the impulse turbine
The cavity and the inlet discharge generated in the converging diverging nozzle are given by the formula:

$$Q_{max} = \rho_* v_* S_{min} = \sqrt{\gamma P_0 \rho_0} \left\{ \frac{2}{\gamma + 1} \right\}^{\frac{1+\gamma}{2(\gamma - 1)}} \cdot S_{min}$$

**21.** An electric power generation system according to claim 19, wherein in the electric power generation system the maximum speed is calculated with the formula:

$$V_{max} = C_0 \left( \frac{2}{\gamma - 1} \right)^{\frac{1}{2}}$$

**22.** An electric power generation system according to claim 1, wherein the calculation of the power delivered by the jet to the Pelton wheel in the drive turbine is given by the formula:

$$P = \rho Q u(v_j - u)(1 - cos\beta)$$

**23.** An electric power generation system according to claim 1, wherein the wind flow enters the inlet cavity through a Venturi and undergoes a first acceleration stage and then enters the converging diverging nozzle which accelerates it more so that at the output of the device a high speed jet is produced; wherein the value of the output speed is dependent on the speed with which the wind enters the system; and also dependent on the dimensions of the following cross sections:
Inlet cavity, which is the widest part of the Venturi; Venturi outlet cavity; cross section of the convergent part of the nozzle; cross section of the diverging part of the nozzle.

**24.** An electric power generation system according to claim 1 wherein said system operate with laminar flows, turbulent, strong winds and even gale force winds.

**25.** An electric power generation system according to claim 1, wherein the system can be used both in ground and in the ocean.

Fig. 1

Fig. 2

Fig. 3

$$u = 2\pi n r$$

Fig. 4

105

103

$S_{min}$

$S_1$

109

Fig. 5

106

u

α

w

β

$v_j$

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 661601 B2, Reitz
- FR 25877631, Thomas
- GB 2413829 A
- GB 2430982 A
- KR 20130073241 A